# EUROPEAN PATENT SPECIFICATION

(11) **EP 2 450 640 B1**
(45) Date of publication and mention of the grant of the patent: **08.05.2019**
(21) Application number: 11188512.5
(22) Date of filing: 09.11.2011
(51) Int. Cl.: F24F 11/00, G05D 22/02

(54) **Humidity control system**
Feuchtigkeitssteuerungssystem
Système de contrôle de l'humidité

(30) Priority: 09.11.2010 GB 201018932
(43) Date of publication of application: 09.05.2012
(73) Proprietor: Zehnder Group Lenham Limited, Maidstone, Kent ME17 2DE (GB)
(72) Inventor: Croke, Anthony Laurence, Rustington, West Sussex BN16 3LF (GB); Sweeney, Paul, Rustington, West Sussex BN16 3LF (GB); Byne, Daniel, Rustington, West Sussex BN16 3LF (GB); Rahimi, Darius, Rustington, West Sussex BN16 3LF (GB); Simpson, Nigel, Ventnor, Isle of Wight PO38 3BZ (GB)
(74) Representative: Dehns

(56) References cited:
- EP-A2- 1 306 625
- WO-A1-98/07083
- GB-A- 2 210 966
- US-A1- 2005 252 983
- US-A1- 2009 057 430

## Description

The invention relates to humidity control systems, particularly ventilation systems in buildings. The invention finds particular utility in the domestic environment, e.g. in kitchens and bathrooms.

Ventilation devices (e.g. extractor fans) are frequently switched on and off by a variety of controls. For example the fans may be linked to switches, such as light switches so that the fan switches on when the light is switched on, or they may use timers so that the fan may continue to run for a specified time after the switch is switched off, or it may have a humidity sensor to control the fan based on the level of moisture in the air.

Humidity sensors are particularly useful in bathrooms or kitchens where large amounts of moisture can be created during baths/showers or during cooking. Currently available humidity sensing fans switch on or increase their performance when the humidity rises above a given threshold level and switch off when the humidity drops back down again below a threshold level. However the performance of these fans is far from optimal.

Humidity sensors measure relative humidity which is a measure of the partial pressure of water vapour in the air as a percentage of the saturated water vapor pressure. The relative humidity of air can change vastly depending on the weather (e.g. after a period of high rainfall) and on other systems such as air conditioning systems or dehumidifiers which remove moisture from the air. The relative humidity also depends on temperature which affects the saturated level of water vapour. The ambient relative humidity can therefore vary greatly with time, sometimes being low (e.g. below 40%) or sometimes being high (e.g. above 80%).

Humidity controlled fans address this issue by selecting a relative humidity threshold which is considered to be high and triggering the fan when the threshold is exceeded. A typical threshold value for such systems is 65%. It is deemed that if the humidity rises above 65% then it is likely to be because of a humidity generating event (e.g. bath, shower, cooking, etc.) and the fan is switched on to compensate. However it is not at all unusual to have an ambient relative humidity of 65%, for example before a thunderstorm. In such situations, the humidity controlled fan may switch on even though there is no associated moisture-event. The high ambient humidity level is not particularly problematic and in any case running the extractor fan will not make any difference as the extracted air will be replaced with air of the same humidity. These situations therefore cause nuisance running of the fan, wasting power and causing unnecessary noise (particularly problematic with extractor fans in en-suite bathrooms which can switch on at night while people are trying to sleep.

US 2005/0252983 describes a method of controlling ventilation based on humidity gradients. In one example two gradient comparisons are made. US 2009/0057430 describes a method of controlling ventilation by comparing a current humidity sensor value with a threshold based on a calculated average humidity.

According to the invention there is provided a method of operating a ventilation system, comprising: taking readings of humidity level at intervals in time; monitoring the number of consecutive rises in humidity level; and selectively increasing the ventilation rate of said system based on said number of consecutive rises.

By increasing the ventilation rate in response to a number of consecutive rises, the ventilation system is not dependent on a simple humidity threshold level. Rises in ambient humidity level will typically involve a number of rises in humidity as detected by the sensor interspersed with a number of falls in humidity as detected by the sensor. Therefore a slowly varying rise in humidity level which is attributable only to changes in ambient humidity will not trigger the system to switch to boost mode. On the other hand, a humidity generating event, i.e. an artificial or abnormal rise in humidity which goes above the ambient level will typically involve a number of consecutive rises in humidity. The system can therefore more reliably distinguish between these two types of humidity change and can activate boost mode appropriately.

It should be noted that this method provides more sophisticated control than a simple gradient threshold. Humidity sensor readings can involve quite high, but quite localised spikes which have a high gradient, but should be ignored for triggering an increase in ventilation rate. While these could be smoothed out simply by increasing the interval between readings, that would reduce the resolution and sensitivity of the system. By monitoring the number of consecutive rises, it is possible to ignore localised spikes while still retaining time sensitivity and providing a fast response to humidity changes.

While the system can operate based solely on the number of consecutive rises, in preferred embodiments the ventilation rate is selectively increased based on the number of consecutive rises and on the size of at least one of said consecutive rises. The combination of these two criteria allows the system to respond faster to higher rises and slower to smaller rises. For example while a single rise of 2% in relative humidity may not be indicative of an abnormal spike, a single rise of 10% would be abnormal and at the same time five consecutive rises of 1% could be abnormal. The system can therefore determine that where larger rises are involved, fewer consecutive rises should be required in order to increase the ventilation rate.

When taking into account the size of one of the rises, the system may choose any of the rises, for example the system may store and examine the history of the consecutive rises and make a determination based on the largest of those rises or on some combination (e.g. an average) of those rises). However for simplicity, the system may choose either to base its decision on the size of the first of the consecutive rises (storing the size of the rise and/or the number of required rises each time a new rise is detected) or in preferred embodiments, the at least one of said consecutive rises is the most recent consecutive rise. In such embodiments, the system merely counts the number of consecutive rises and compares that count to the size of the current reading.

The link between number of consecutive rises and the size of an individual rise could be determined by way of a formula or other relationship. For simplicity of implementation, in preferred embodiments the number of consecutive rises and the corresponding size of at least one of the rises are associated in a look up table and the step of selectively increasing the ventilation comprises looking up one criteria in the look up table and determining if the corresponding criterion is also met. Look up tables are fast to implement and easy to update or modify which may be particularly relevant for setting up different systems for different countries/climates where the relationship/lookup table may vary considerably. The relationship may also be varied simply according to a user's preference.

Preferably, in the look up table, higher numbers of rises are associated with lower sizes of rise. Higher rises are indicative of more unusual changes in humidity and the system can therefore have higher confidence in detecting an abnormal spike when it detects higher individual rises. This allows the system to respond faster in situations where the confidence enables it to do so.

Once the system has been programmed to detect an artificial spike and increase the ventilation rate accordingly, the next problem is to determine when to reduce the ventilation rate again. The goal of the system will normally be to return the humidity level to the ambient humidity level, however this is not always straightforward. During an abnormal humidity spike, which may be of indeterminate length, the ambient humidity level can change. Therefore systems which store the ambient humidity before a spike and attempt to return the humidity to that stored level can encounter problems when the ambient humidity level has increased. As the humidity level cannot be reduced below the actual ambient level, the stored target value may never be reached and the system will continue running at increased strength long after the actual ambient humidity level has actually been reached. Such operation is inefficient in energy usage and can be annoying in terms of raised noise levels for prolonged periods.

In preferred embodiments the method further comprises: storing an ambient humidity level before the increase in ventilation rate, monitoring a peak humidity level, calculating a threshold humidity level based on said ambient humidity level and said peak humidity level, and reducing the ventilation rate of the system after the current humidity level has reduced below said threshold humidity level. The threshold level is set somewhere between the previous ambient level and the peak level. Exactly where in this region the humidity threshold is set will depend on the circumstances, for example there is a balance to be struck between returning the humidity level to ambient quickly versus ensuring that the system does not try to overshoot a raised ambient level. This may depend on the environment in which the system is used and the expected duration of humidity spikes. For example, during longer spikes there is more likelihood of a problematic increase to the ambient humidity level and so the threshold may be set more cautiously. On the other hand, setting the threshold too cautiously reduces the length of time the system operates at higher power and therefore reduces the system's ability to remove excess moisture from the air.

In preferred embodiments, the ventilation rate of the system is reduced a predetermined time after the current humidity level has reduced below the threshold humidity level. By introducing a timed period of operation after the threshold level has been passed, the system can set the threshold cautiously so as to avoid overshooting a raised ambient humidity level, while at the same time ensuring continued operation of the system at higher power to continue extracting moisture from the environment. The balance between the threshold and the duration of the overrun timer will depend on the circumstances of the installation.

The ambient humidity before the abnormal spike can be calculated in a number of ways. It may be taken simply as the reading immediately prior to the spike. Alternatively, it could be taken as a reading a preset time before the spike. In some preferred embodiments the stored ambient humidity level is based on an average of humidity readings taken before the consecutive rises. The average may be a weighted average. The average may include the reading which marks the start of the spike, but preferably excludes that reading.

The humidity readings used to calculate the average may be the same readings as those used to assess rises in humidity. However in preferred embodiments they are more frequent than the readings used to determine consecutive rises. Due to the amount of variance in value that is found in consecutive readings from a humidity sensor, it is preferred to smooth out some of the variation when assessing the consecutive rises. However when assessing the ambient humidity level, there is no reason to omit those values and in fact a more accurate value can be obtained by including them. The timings may be varied depending on circumstances, but in some preferred embodiments, the readings for assessing consecutive rises are half as frequent as the readings used for calculating the average. In preferred embodiments, the time between consecutive readings is between 10 seconds and 1 minute, most preferably about 30 seconds. Therefore when every other reading is taken for assessing consecutive rises in humidity, those readings are separated by between 20 seconds and 2 minutes, most preferably about 1 minute.

In preferred embodiments, the calculated threshold level is an average of the stored ambient humidity level and the peak humidity level. This provides a good target threshold as the humidity level will be reduced by half the value of the overall abnormal spike. The ambient humidity level is unlikely to have risen by such a large amount and so the system will reliably reduce its extraction power. It should be noted that the reduced extraction level may involve switching the fan off completely, or it may simply reduce the fan to a lower trickle flow setting.

According to another aspect, the invention provides a ventilation system comprising: at least one humidity sensor, at least one ventilation fan, and a controller, wherein said controller is arranged to take readings from said humidity level at intervals in time, monitor the number of consecutive rises in humidity level and selectively increase the ventilation rate of said at least one fan based on said number of consecutive rises.

The preferred features described above in relation to the method apply equally to the system. Therefore the controller is preferably arranged to selectively increase the ventilation rate based on the number of consecutive rises and on the size of at least one of said consecutive rises. The at least one of said consecutive rises may be the most recent consecutive rise.

The system preferably further comprises a look up table which stores the number of consecutive rises in association with the corresponding size of at least one of the rises, and the controller is preferably arranged to selectively increase the ventilation rate based on looking up one criteria in the look up table and determining if the corresponding criterion is also met. In the look up table, higher numbers of rises may be associated with lower sizes of rise.

The controller is preferably further arranged to: store an ambient humidity level before the increase in ventilation rate, monitor a peak humidity level, and calculate a threshold humidity level based on said ambient humidity level and said peak humidity level, and the controller is preferably arranged to reduce the ventilation rate of the system after the current humidity level has reduced below said threshold humidity level.

The controller may be arranged to reduce the ventilation rate of the system a predetermined time after the current humidity level has reduced below the threshold humidity level.

The stored ambient humidity level may be based on an average of humidity readings taken before said consecutive rises. The humidity readings used to calculate the average may be more frequent than the readings used to determine consecutive rises. The calculated threshold level may be an average of the stored ambient humidity level and the peak humidity level.

The technique for reducing the ventilation rate of the system following a spike is considered to be independently inventive, regardless of the method used to increase the ventilation rate in the first place.

Therefore according to a further aspect, the invention provides a method of operating a ventilation system, comprising: storing an ambient humidity level, detecting a rise in humidity level, in response to detecting said rise, increasing a ventilation rate of said system, monitoring a peak level of humidity, calculating a threshold humidity level based on said stored ambient humidity level and said peak humidity level, and decreasing the ventilation rate of said system after the humidity level falls below said threshold.

The preferred features described above, apply equally to this method. Preferably therefore the ventilation rate is decreased a predetermined time after the humidity level falls below said threshold.

According to a further aspect, the invention provides a ventilation system, comprising: at least one humidity sensor, at least one fan, and a controller, wherein the controller is arranged to store an ambient humidity level, detect a rise in humidity level, increase a ventilation rate of said fan in response to detecting said rise, monitor a peak level of humidity, calculate a threshold humidity level based on said stored ambient humidity level and said peak humidity level, and decrease a ventilation rate of said fan after the humidity level falls below said threshold.

The controller is preferably arranged to decrease the ventilation rate of said fan a predetermined time after the humidity level falls below said threshold.

According to a further aspect, the invention provides a method of operating a ventilation system, wherein the ventilation rate of the system is increased upon activation of a switch and wherein the ventilation rate of the system is decreased upon expiry of an overrun timer which is activated upon deactivation of the switch, wherein the length of the overrun timer is dependent upon the length of activation of the switch.

Varying the length of the overrun timer according to the length of activation of the switch ties the amount of post-activity extraction to the length of activity itself. For example, if the switch is only activated for a short time (e.g. a few seconds to a few minutes), there may be no need for extraction to continue at a high level after the switch is deactivated. In other situations, e.g. if the switch has been activated for longer period of time (such as during a bath), there may be a significant need for extraction of air (and humidity for example) after the switch has been deactivated.

The overrun timer could be matched to (or set dependent upon) the duration of switch activation on an unlimited basis. However there is a point at which further duration of overrun extraction will not make further improvements to the environment, for example, an overrun of 2 hours would, in most domestic circumstances not make any significant improvement over an overrun of 15 minutes. Therefore in preferred embodiments the overrun timer is capped at a maximum overrun length. It will be appreciated that the level of the cap will vary according to circumstances. For example in non-domestic settings, where the extraction system is installed in larger rooms (e.g. in laboratories), the cap may be for a longer period. In particularly preferred embodiments for domestic settings, the cap is about 15 minutes.

The duration of the overrun timer may be varied on a continuous basis. For example, the overrun timer could be exactly matched to the duration of switch activation (with the optional cap described above). However, for smaller durations (e.g. a few seconds), there would be little benefit to an exact match. Therefore preferably, upon deactivation of the switch, the overrun timer is set to one of a plurality of discrete overrun lengths. The discrete overrun lengths can be matched to particular expected activities and appropriate overrun durations. For example, in a toilet, a distinction can be made between short activation with no overrun and longer activation with a short overrun for extracting odours. In a bathroom or shower room, a distinction can be made between short activity with medium overrun for moderate humidity ventilation and longer activity with longer overrun for heavy humidity ventilation. The above scenarios may of course be combined.

In some preferred embodiments the shortest overrun length is no overrun. In extremely short switch activation periods, there will be no need for increased extraction at all, so no overrun is desired.

In some preferred embodiments the number of discrete overrun lengths is four. Preferably the discrete overrun lengths are in five minute intervals. In a particularly preferred embodiment, the overrun lengths are no overrun, about 5 minutes overrun, about 10 minutes overrun and about 15 minutes overrun. Preferably the activation lengths for these periods match the overrun ranges, i.e. the zero overrun activation period is between zero minutes and 5 minutes, the 5 minute overrun period is between 5 minutes and 10 minutes, etc.

According to a further aspect, the invention provides a ventilation system comprising a fan, a switch and a controller, wherein the controller is arranged to increase the ventilation rate of the system upon activation of the switch and wherein the controller is arranged to decrease the ventilation rate of the system upon expiry of an overrun timer which is activated upon deactivation of the switch, wherein the length of the overrun timer is dependent upon the length of activation of the switch.

The preferred features described above in relation to the method apply equally to the system. Therefore, preferably the controller is arranged to cap the overrun timer at a maximum overrun length. Preferably, upon deactivation of the switch, the controller is arranged to set the overrun timer to one of a plurality of discrete overrun lengths. Preferably the shortest overrun length is no overrun. Preferably the number of discrete overrun lengths is four. Preferably the discrete overrun lengths are in five minute intervals.

It will be immediately understood that the above humidity sensing algorithm and the above overrun timer algorithm can readily be combined in the same apparatus. Depending on circumstances, either system may be given priority, or each may be given equal priority. The system may be arranged so that if either sub-system indicates a boost mode, the system as a whole is set to boost mode.

It will be appreciated that the above systems and methods may be applied to any ventilation system, including single extractor fans for domestic or industrial use, centralised mechanical extract ventilation systems with a central extraction unit and several ducts to separate rooms within a building, or to two-way systems with air intake as well as air extraction, including heat exchangers where applicable. In centralised systems, the increased and decreased extraction capability may be effected by way of valves. In other embodiments it may include actual increase in system extraction power, e.g. by increasing fan speed.

Preferred embodiments of the invention will now be described, by way of example only, and with reference to the accompanying drawings in which:
Fig. 1 shows the output from a humidity sensor and its effect on a simple threshold based fan system
Fig. 2 shows the output from a humidity sensor and its effect on a system according to the invention; and
Figs. 3 to 7 are flow diagrams illustrating the operation of a humidity control system according to the invention.

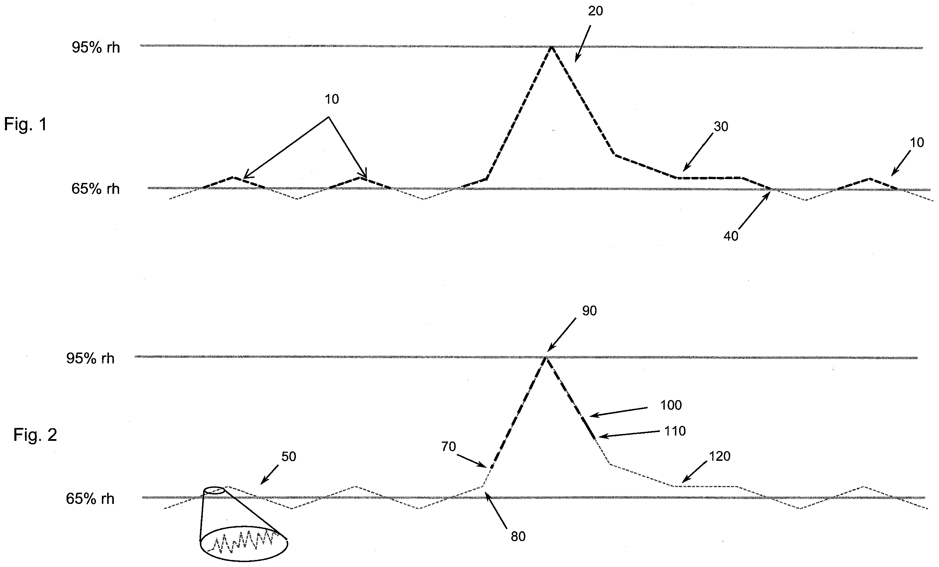

The general problem addressed by the invention and the principle on which the invention operates are illustrated in Figs. 1 and 2. Fig. 1 shows the operation of a fixed threshold controlled fan. The threshold is set to 65% relative humidity. The dotted line indicates the level of humidity as measured by the humidity sensor with respect to time. The dashed line indicates the boost operation of the fan. In this illustration the fan is a continuously running fan which boosts performance according to the measured humidity. When such fans are not in boost mode, they run at a lower trickle speed. There may be intermediate speed levels.

To the left hand side of Fig. 1 the humidity level is oscillating around 65%. This represents a reasonably high ambient humidity level, but there are no particular events which have given rise to this level. As the humidity rises above 65% the fan's boost is triggered (as indicated at 10). As the humidity drops back down below 65% the fan's boost is switched off again. These periods of operation are not desired and represent nuisance running of the fan.

In the middle part of Fig. 1 a large humidity spike 20 can be seen where the measured relative humidity rises up to 95%. This represents a humidity-generating event such as a bath or a shower or kitchen activity for example (depending on the location of the fan). The fan's boost is correctly switched on to increase air extraction from the room and hence to remove moisture and control the humidity.

Towards the right hand side of Fig. 1 the humidity spike 20 drops back down towards the previous ambient humidity level (i.e. towards about 65%), but due to a rise in the ambient humidity during the spike 20, it levels out at a level 30 above the threshold of 65% and hence the fan continues to run in boost mode. The fan does not switch off until the ambient humidity finally drops back below the threshold as indicated at 40. A further period of nuisance running 10 is shown at the far right of Fig. 1.

Fig. 2 illustrates operation of the invention. Similar to Fig. 1, the sensed humidity level is indicated by a dotted line and the operation of the fan's boost mode is indicated by dashed and solid lines. The inset at the left of Fig. 1 shows the variation of the output of the humidity sensor in a short timescale (a few seconds) where the output varies erratically. On the larger scale, the ambient humidity begins by oscillating around 65% similarly to the Fig. 1 illustration. However the fan is not controlled based on a fixed threshold. Therefore as the humidity rises above 65% as illustrated at the left hand side of Fig. 2 at 50, the fan is not switched into boost mode. The rise in humidity at these points is small and slow and so is deemed to be a mere change in ambient humidity.

In the middle of Fig. 2, a large humidity spike 60 is shown, again similar to that shown in Fig. 1. As the humidity starts to rise, the system monitors to see how sharply it rises and does not immediately trigger the fan's boost mode. Instead it waits until it has ascertained that an unusually fast and continuous rise is underway before switching the fan to boost as indicated at 70. Before the humidity starts to rise, the system stores the average of a number of previous readings as an indication of the ambient humidity prior to the spike 60. The last recorded ambient humidity level is indicated at 80.

As in Fig. 1, the humidity spike 60 of Fig. 2 peaks at 95% relative humidity (as indicated by reference numeral 90) and then drops back towards ambient levels. To determine when to switch off the fan's boost mode, the system monitors for the humidity level to drop below a level half way between the peak 90 and the previous ambient level 80. This point is indicated by reference numeral 100 and marks the end of the dashed line which represents the period in which the boost mode is controlled by the sensed humidity. After this point, the fan continues to run in boost mode as indicated by the solid line, but this operation is governed by a humidity overrun timer which operates for 5 minutes until it is switched off at 110. After this point the humidity is deemed to be at a satisfactorily reduced level. As shown in Fig. 2, the humidity level may continue to reduce after the boost mode has been switched off, but the fan is prevented from continued operation even if the ambient humidity has risen in the mean time (as can be seen at 120 where the humidity returns to an ambient level above 65% and indeed above the previously measured ambient level 80.

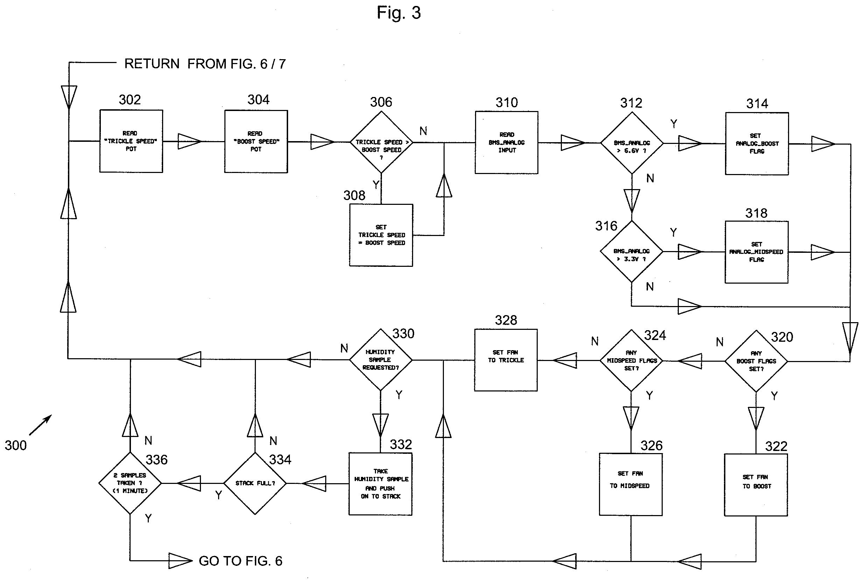

An embodiment of the invention will now be described in detail with reference to the process flow diagrams shown in Figs. 3 to 7.

Fig. 3 shows a main program loop 300. In steps 302 and 304 the boost speed and the trickle speed are read from potentiometers on the circuit board. The boost speed is the speed at which the fan runs when it is in boost mode. The trickle speed is the minimum speed at which the fan runs continuously. In step 306 the process checks if the trickle speed has been set greater than the boost speed. Such a setting would give erroneous operation and so the trickle speed is capped at the boost speed in step 308. A midspeed of the fan is calculated as an average of the trickle speed and the boost speed (although this step is not illustrated).

At step 310 the process reads an analog input from the building management system (BMS). This allows the BMS to indicate a minimum speed mode of the fan. The voltage of the BMS analog input is used to determine whether the BMS is requesting trickle mode, midspeed mode or boost mode. The analog input is 0-10 V. The process first looks for a voltage greater than 6.6 V in step 312 and if found, sets the ANALOG_BOOST flag in step 314. If the voltage in step 312 is less than 6.6 V the process checks in step 316 for a voltage greater than 3.3 V and if found, sets the ANALOG_MIDSPEED flag in step 318.

In addition (or as an alternative), the BMS may provide digital inputs which can be used to set digital boost and midspeed flags.

In steps 320 to 328, the fan speed is set to either boost mode, midspeed mode or trickle mode. In step 320 the process checks all the system boost flags. If any boost flag is set (i.e. if any sub-system or input requests boost mode), the fan is set to boost mode in step 322.

If no boost flags are set, then at step 324 the process checks all the system midspeed flags. If any midspeed flag is set (i.e. if any sub-system or input requests midspeed mode), the fan is set to midspeed mode in step 326.

If no boost flags and no midspeed flags are set then the fan is set to trickle mode in step 328. It can therefore be seen that any boost flag takes highest priority and that any midspeed flag has a lower priority. Trickle mode only operates if no higher speed mode is requested.

At step 330 the process checks if it is time to request a humidity sample (which in this embodiment is every 30 seconds). If it is not time for a humidity sample, the process loops back to step 302. If it is time for a humidity sample, one is taken at step 332 and it is pushed onto a stack (not shown). The stack in this embodiment holds ten humidity values. As a new value is pushed onto one end of the stack, the oldest value is pushed off the other end of the stack.

Step 334 checks if the stack is full. In this embodiment the system does not look for humidity spikes until the stack is full and it has a reliable measure of ambient humidity (based on the average of all the values in the stack). This situation will only exist during the first five minutes of operation when the fan is powered on. It is a good idea to keep the fan in relatively constant humidity during this five minute period in order to avoid anomalous results. In a variation of this embodiment, step 334 can be omitted and the stack is simply filled with some initial values upon start up. For example, the first humidity reading can be replicated throughout the stack, thus taking the first reading to be the ambient humidity initially.

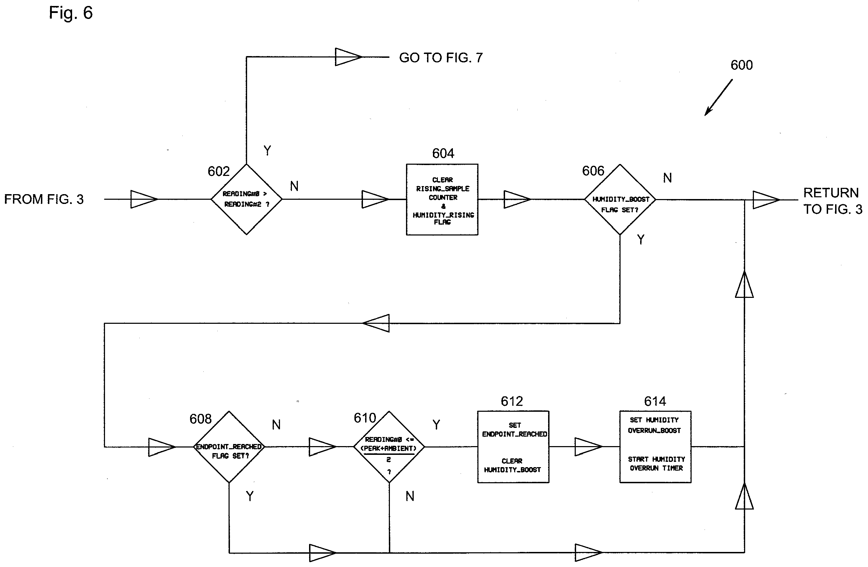

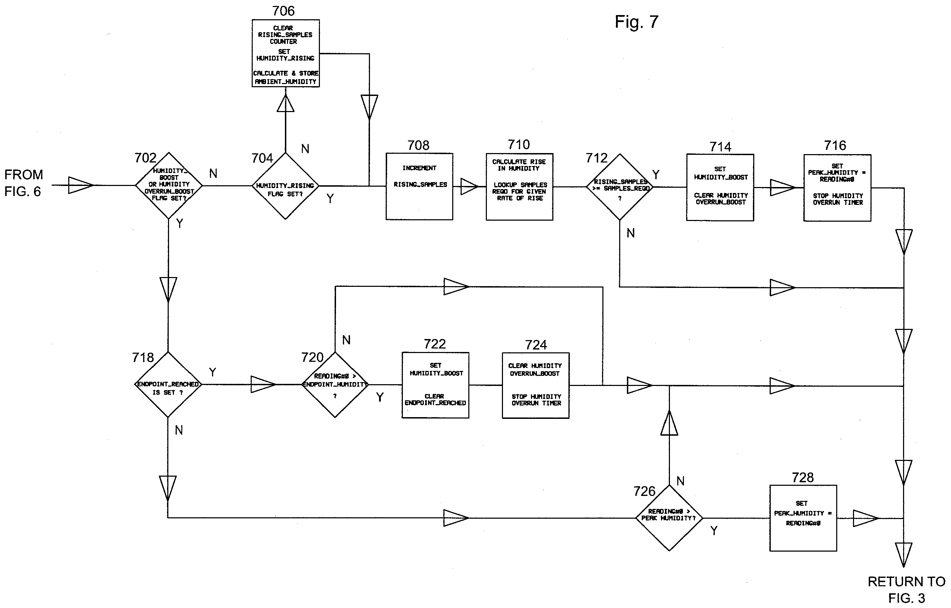

Step 336 checks for every other reading and passes it to the humidity monitoring sub-routine described in relation to Figs. 6 and 7. The skipping of every other value by the humidity monitoring subroutine increases the timescale over which humidity is monitored, spreading out the timing of the readings that are used in that process. Therefore in this embodiment readings are only passed to the humidity monitoring sub-routine every minute. On the other hand, every sensed humidity value (i.e. the values every 30 seconds) are used in the averaging calculation to determine the ambient humidity level. It is better to use every reading for this calculation for improved accuracy.

In alternative embodiments, step 336 could be omitted and every sensed value could be sent to the humidity monitoring sub-routine. In other variations, every third, or every fourth reading could be passed to the sub-routine or indeed any other regular subset of readings. The embodiment shown here passes readings to the humidity monitoring sub-routine every minute as these are deemed to be far enough apart that significant rises will be captured. Humidity readings from the sensor are subject to some error and fluctuation. Therefore readings taken every 30 seconds can oscillate higher/lower even when humidity is rising. However, readings every minute have been found to rise fairly consistently during humidity events, e.g. when a source of humidity has been introduced into the environment (e.g. from a bath, shower, cooking, etc.).

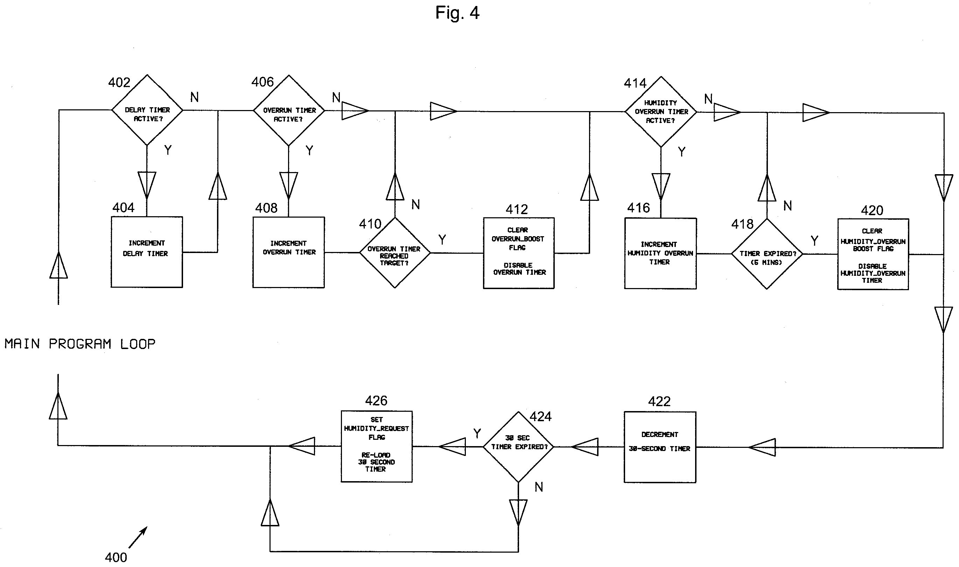

Fig. 4 shows a timer interrupt routine 400 which is called by a timer every 0.5 seconds, interrupting any other process flow. The timer interrupt routine 400 deals with the various timers which control aspects of system operation, checks if they have reached their limits and sets flags accordingly.

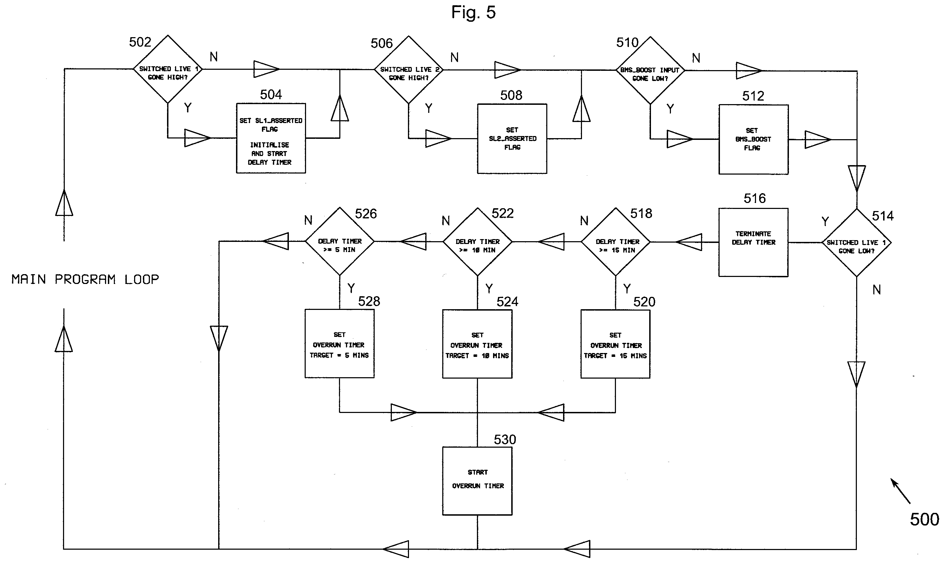

In step 402 the routine 400 checks if the delay timer is active. If it is, the delay timer is incremented in step 404. The delay timer is used in relation to the intelligent overrun feature of the system and times how long switch SL1 has been on (SL1 is a switch live input from a switch, typically a light switch). This process is described in more detail with reference to Fig. 5.

In step 406, the routine 400 checks if the overrun timer is active. If it is, the overrun timer is incremented in step 408. Step 410 then checks if the overrun timer has reached its target and, if it has, step 412 clears the OVERRUN_BOOST flag and disables the overrun timer. This process takes care of the intelligent overrun timer once it has been triggered. As described elsewhere, while the overrun timer is active, the fan is operated in boost mode. Once the target time has been reached, the timer can be disabled and the OVERRUN_BOOST flag can be cleared.

In step 414, the routine 400 checks if the humidity overrun timer is active. If it is, the humidity overrun timer is incremented in step 416. Step 418 then checks if the humidity overrun timer has reached its target (5 minutes in this embodiment) and if it has, step 420 clears the HUMIDITY_OVERRUN_BOOST flag and disables the humidity overrun timer. This process takes care of the intelligent humidity overrun timer once it has been triggered. As described elsewhere, while the humidity overrun timer is active, the fan is operated in boost mode. Once the target time (5 minutes) has been reached, the timer can be disabled and the HUMIDITY_ OVERRUN_BOOST flag can be cleared. Although not shown in the figure, the ENDPOINT_REACHED flag is also cleared in step 420.

Steps 422 to 426 take care of the 30 second timer for triggering readings of the humidity sensor. In step 422 the timer is decremented. Step 424 checks if the 30 second time period has expired. If it has, step 426 sets the HUMIDITY_REQUEST flag (to be checked in step 330) and resets the 30 second timer to 30 seconds. Although not indicated in the figures, the HUMIDITY_REQUEST flag is cleared in step 332.

After step 426, process flow returns to the main program loop.

It will be appreciated that where timers have been described as incrementing or decrementing, this is simply an implementation choice and could easily by made the other way round. In particular, the overrun timer and the humidity overrun timers could easily be set to decrement from their target values instead of incrementing to them. Similarly the 30-second timer could be arranged to increment up to 30 seconds instead of decrementing to zero.

Fig. 5 shows an external interrupt handling routine 500. This routine 500 is called any time that an external input changes, for example if a switch status changes or if a digital control signal from the Building Management System changes state. In this embodiment, the external inputs are two switches (Switched Live 1 and Switched Live 2) and a BMS Boost input. Switched Live 1 and 2 are asserted when the inputs are high. The BMS Boost input is set when the input is grounded (low). However it will be appreciated that these settings are implementation dependent and can readily by changed without affecting the inventive operation of the system.

At step 502 the status of Switched Live 1 is checked to determine if it has gone high (i.e. it has been asserted). If it has then in step 504 the SL1_ASSERTED flag is set and the delay timer is initialised and started. At step 506 the status of Switched Live 2 is checked. If it has gone high (i.e. it has been asserted), then in step 508 the SL2_ASSERTED flag is set. In step 510 the status of the BMS Boost input is checked. If it has gone low (i.e. it has been asserted) then the BMS_BOOST flag is set. In this embodiment: the duration of assertion of the Switched Live 1 input is used to set the duration of the overrun timer (as described further below). Switched Live 2 is not further used in this embodiment. In other embodiments it may be used to supply a medium speed which is calculated as the mid point between the boost and trickle speed settings. This medium speed can be used when the unit is wired to a 3 position switch. The BMS boost signal is used to provide an indication that the Building Management System wants the fan to be in boost mode regardless of other circumstances.

At step 514, the status of Switched Live 1 is checked to determine if it has gone low (i.e. unasserted). If it has not then process flow returns to the main loop 300. If Switched Live 1 has gone low, then at step 516 the delay timer is terminated. The value of the delay timer now represents the amount of time that Switched Live 1 has been high (asserted). Steps 518 to 528 use this value to determine the target length of the overrun timer. In step 518, if the delay timer is greater than or equal to 15 minutes then step 520 sets the overrun timer to a target time of 15 minutes. Otherwise, if the delay timer is less than 15 minutes then step 522 checks if the delay timer is greater than or equal to 10 minutes. If it is then step 524 sets the overrun timer to a target time of 10 minutes. Finally, if the delay timer is less than 10 minutes then step 526 checks if the delay timer is greater than or equal to 5 minutes. If it is then step 528 sets the overrun timer to a target time of 5 minutes.

If the result of the comparisons in steps 518, 522 and 526 are that the delay timer was greater than or equal to 5 minutes then the overrun timer is started at step 530. On the other hand, if the delay timer was less than 5 minutes, no overrun target is set and the overrun timer is not started.

This intelligent overrun feature approximately matches the length of the overrun timer to the length of time that Switched Live 1 was active. When the Switched Live input goes active, the fan is put into boost mode and when the Switched Live input goes inactive, the fan remains in boost mode for the specified overrun time. The arrangement here provides four different overrun levels: 0 minutes, 5 minutes, 10 minutes and 15 minutes. However other embodiments could easily provide more or fewer levels. The length of time that the switch (typically a light switch) is on is used as an indication of the level of activity and therefore an indication of the level of ventilation that may be required. For example in kitchens and bathrooms, if the light has only been on for 5 minutes, it is unlikely that there will be significant humidity or odours to extract. Therefore when the light is switched off, there is no need for any overrun and the fan can return to normal operation immediately. If the light has been on for more than 5 minutes then the system determines that there may be some level of humidity or odours to clear from the room and the fan is left on boost mode for an additional period after the light is switched off before returning to normal operation. The length of the overrun period is ramped up in discrete steps to match the length of activity indicated by the switch duration. The overrun period is capped (in this embodiment at 15 minutes) to avoid excessive overrun (for example if the light is accidentally left on for a few hours, the overrun timer should not match that on period).

It will be appreciated that the scale could be made continuous rather than discrete, with the overrun timer simply being set to exactly match the delay timer (possibly with caps on the extremes as above). However the discrete stages are used to separate different types of activity. For example, in a toilet, it is useful to distinguish between activities of less than 5 minutes which are unlikely to have generated odours and those of greater than 5 minutes which may benefit from a short (e.g. 5 minute) overrun boost mode to clear odours. Additionally, in a bathroom, it is useful to distinguish between a relatively short shower (typical bathroom usage time of 10-15 minutes) which will require a moderate overrun to clear humidity (e.g. 10 minutes) and a long soak in a hot bath (typically greater than 15 minutes) which will require a greater overrun to clear the greater humidity (e.g. 15 minutes). By using discrete steps in this way, the overrun periods can be set to the minimum necessary for the required activity. A continuous matching scale would tend to run the fan in boost mode for longer in situations where it was not necessary. This arrangement therefore reduces unnecessary power consumption and noise.

Figs. 6 and 7 describe the humidity control algorithm. In particular Fig. 6 describes operation where the humidity is stable or falling and Fig. 7 describes operation where the humidity is rising.

At step 602, the most recent reading (Reading#0) is compared with the previous reading (As described above, in this embodiment the previous reading for the purposes of assessing humidity is Reading#2 which is 1 minute previous to Reading#0. Reading#1 which was only 30 seconds previous was ignored by step 336 and is only used for determining average humidity). If the comparison indicates that the humidity is rising, the process proceeds to step 702 in Fig. 7. If the comparison indicates that humidity is level or falling, the process proceeds to step 604 which clears the RISING_SAMPLE counter and clears the HUMIDITY_RISING flag. Next, in step 606, the status of the HUMIDITY_BOOST flag is checked. If it is clear, the process returns to the main program loop 300. If the HUMIDITY_BOOST flag is not set and the humidity is not rising then the humidity is either 1) in a normal ambient humidity fluctuation or 2) it is returning from an abnormal fluctuation, but has returned over half way to the expected ambient level (although it may still be in the humidity overrun period). No further action is needed in these situations.

If the HUMIDITY_BOOST flag is found to be set at step 606 then the humidity is in the process of returning to ambient from an abnormal spike which caused the fan to boost. The process therefore needs to check how far it has fallen in relation to the peak humidity level and the previous ambient humidity level. At step 608 the ENDPOINT_REACHED flag is checked. If the flag is set, no further action is taken and the process returns to the main program loop 300.

If the flag is not set then the process checks in step 610 if the current humidity reading (Reading#0) is less than or equal to the target end point, which in this embodiment is the average of the peak humidity and the stored previous ambient humidity (i.e. the ambient humidity before the humidity spike). If the humidity has not yet dropped to this level, no further action is needed and the process returns to the main program loop 300. If the end point has been reached then in step 612 the ENDPOINT_REACHED flag is set and the HUMIDITY_BOOST flag is cleared. Then at step 614 the HUMIDITY_OVERRUN_BOOST flag is set and the humidity overrun timer is started. The process then returns to the main program loop 300.

Steps 610 to 614 deal with the situation where the humidity has fallen from an artificial spike to a target level and where the process is to switch the boost control from humidity monitoring to humidity timer monitoring. The target level of (peak + ambient)/2 is chosen because it indicates a significant drop in the humidity, but should still be sufficiently high above the expected ambient humidity that the level will be reached with certainty. Although the HUMIDITY_BOOST flag is cleared at this point, continued operation of the fan to reduce the humidity level further is ensured by immediately setting the humidity overrun timer and the HUMIDITY_OVERRUN_BOOST flag to take over. The duration of the humidity overrun timer in this embodiment is 5 minutes, but it will be appreciated that this can be varied according to circumstance and preference.

If the determination in step 602 of Fig. 6 was that the humidity was rising, the process proceeds to Fig. 7. At Step 702 the statuses of the HUMIDITY_BOOST flag and the HUMIDITY_OVERRUN_BOOST flag are checked. If both flags are unset (i.e. the fan is not in boost mode), then a series of steps 704 to 716 determine if the conditions dictate that the HUMIDITY_BOOST flag should be set. Step 704 checks if the HUMIDITY_RISING flag is set. If the flag is already set then the process is already in the process of monitoring a rise in humidity levels and the process continues to step 708. If the HUMIDITY_RISING flag is unset, step 706 sets the HUMIDITY_RISING flag to start the monitoring process and also clears the RISING_SAMPLES counter (which counts the number of consecutive samples in which the humidity level has risen), and calculates and stores the ambient humidity based on all humidity values currently in the stack, except for the most recent two values (which have contributed to the initial rise). The process then proceeds to step 708.

In step 708 the RISING_SAMPLES counter is incremented. In step 710 the process calculates the rise in humidity (based on the difference between Reading#0 and Reading#2) and looks up in a look up table a number of rising samples corresponding to this rate of rise which should be considered as a non-ambient spike and so trigger a humidity boost. The table may be as follows:

| Change in relative humidity (in percentage points) | Number of consecutive rising samples which indicate an artificial spike |
|---|---|
| > 7% | 1 |
| 5% - 7% | 2 |
| 3% - 5% | 3 |
| 2% - 3% | 5 |
| < 2% | 7 |

As indicated in the table, higher changes in humidity (i.e. corresponding to faster rises in humidity), will give rise to a boost condition quicker. A single rise of greater than 7% is deemed to be an anomaly and a boost is triggered immediately. If the change in humidity is less, e.g. only 3%-5%, then a boost will only be triggered if there have been three consecutive rises in humidity. Any series of seven consecutive rises will be deemed an anomalous spike and will trigger a boost.

Referring back to step 604 of Fig. 6, if at any point the humidity level drops or stays level (i.e. does not rise), then the RISING_SAMPLES counter is reset to zero, so a boost can only be triggered by continuous humidity rises.

It will be appreciated that the above table is an example only and can be varied depending on the circumstances and preferences. For example the values may change depending on the particular expected climate or particular operating environments and the level of humidity rise that will be considered as anomalous.

In step 712, the value of the RISING_SAMPLES counter is compared with the required value obtained in step 710 from the look up table. If the number of rising samples counted so far in this sequence is less than that value the process returns to the main program loop 300. If the number of rising samples counted so far in this sequence is greater than or equal to the required value then the process proceeds to step 714 where the HUMIDITY_BOOST flag is set so as to put the fan into boost mode and the HUMIDITY_OVERRUN_BOOST flag is cleared in case the fan was still in on overrun period from a previous peak. The process then proceeds to step 716 where the PEAK_HUMIDITY value is set to the current reading (READING#0) as an initial value and the HUMIDITY_OVERRUN_TIMER is stopped. The process then returns to the main program loop 300.

If the comparison in step 702 determines that either the HUMIDITY_BOOST flag or the HUMIDITY_OVERRUN_BOOST flag is set (i.e. if the fan is in boost mode), the process proceeds to step 718 where the status of the ENDPOINT_REACHED flag is checked.

The ENDPOINT_REACHED flag will be set only if it has not yet been cleared from the current boost cycle. The ENDPOINT_REACHED flag is set when the humidity drops below the ENDPOINT_HUMIDITY (calculated from the average of the PEAK_HUMIDITY and the AMBIENT_HUMIDITY values) and cleared when the humidity overrun timer expires (in step 420). Therefore the status of the ENDPOINT_REACHED flag determines whether the fan is currently in HUMIDITY_BOOST mode or HUMIDITY_OVERRUN boost mode. If the ENDPOINT_REACHED flag is set, the fan is in HUMIDITY_OVERRUN boost mode, i.e. the humidity has dropped below the calculated target endpoint, but the humidity overrun timer is still going. A check is made in step 720 if the current reading is greater than the ENDPOINT_HUMIDITY (which is calculated on the fly as the average of the PEAK_HUMIDITY and AMBIENT_HUMIDITY). If the current reading is not above the target endpoint (i.e. if the current rise in humidity has not taken it back above the previously set target endpoint), no further action is taken and the program returns to the main loop 300. However, if the current reading is above the previously set target endpoint, then the fan is flipped back HUMIDITY_OVERRUN_BOOST mode to normal HUMIDITY_BOOST mode. This is achieved by clearing the ENDPOINT_REACHED flag and setting the HUMIDITY_BOOST flag in step 722 and clearing the HUMIDITY _OVERRUN _BOOST flag and stopping the humidity overrun timer in step 724. This ensures that when the humidity begins to fall again, the relevant check will be made in step 610 for falling back below the target endpoint. When that happens, the fan will be switched back into HUMIDITY_OVERRUN_BOOST mode again with the timer reset. Steps 720 to 724 therefore ensure that the fan remains in boost mode until the humidity has remained below the target endpoint for at least 5 minutes (or whatever overrun period has been selected).

If the ENDPOINT_REACHED flag is not set in step 718 (i.e. if the fan is in normal boost mode rather than overrun boost mode) then the process proceeds to steps 726 and 728 where the current reading (READING#0) is compared in step 726 with the PEAK_HUMIDITY reading, i.e. the highest reading seen so far in this spike. If the current reading is greater than the highest reading so far, then the PEAK_HUMIDITY value is replaced with the current reading in step 728. The process then returns to the main program loop 300.

Although not shown in the illustrated embodiment, the program may provide a maximum boost time, i.e. a period of time after which the fan will be taken out of boost mode regardless of circumstances. Thus if a particularly unusual set of circumstances cause the fan to enter boost mode and would not otherwise trigger the fan to come out of it, the program ensures that the fan is not left running in boost mode for an excessive period of time. Instead, the fan is effectively reset after this maximum boost period. The maximum boost period could be varied according to the location of the fan. For example, it may be desired to set the maximum boost period to one hour for a fan located in the bathroom, but to two hours or more in a kitchen where it is less unusual to have extended periods of high humidity.

It will be appreciated that the above description is only given by way of example to illustrate how the invention may be put into effect. Many variants of the exact sequence of process steps are possible and many different programming techniques could be used to achieve the same goals.

Other embodiments which do not fall within the scope of the claims:
Embodiment 1. A method of operating a ventilation system, comprising:
   storing an ambient humidity level,
   detecting a rise in humidity level,
   in response to detecting said rise, increasing a ventilation rate of said system,
   monitoring a peak level of humidity,
   calculating a threshold humidity level based on said stored ambient humidity level and said peak humidity level, and
   decreasing the ventilation rate of said system after the humidity level falls below said threshold.
Embodiment 2. A method according to embodiment 1, wherein the ventilation rate is decreased a predetermined time after the humidity level falls below said threshold.
Embodiment 3. A ventilation system, comprising:
   at least one humidity sensor,
   at least one fan, and
   a controller,
   wherein the controller is arranged to store an ambient humidity level, detect a rise in humidity level, increase a ventilation rate of said fan in response to detecting said rise, monitor a peak level of humidity, calculate a threshold humidity level based on said stored ambient humidity level and said peak humidity level, and decrease a ventilation rate of said fan after the humidity level falls below said threshold.
Embodiment 4. A system according to embodiment 3, wherein the controller is arranged to decrease the ventilation rate of said fan a predetermined time after the humidity level falls below said threshold.
Embodiment 5. A method of operating a ventilation system, wherein the ventilation rate of the system is increased upon activation of a switch and wherein the ventilation rate of the system is decreased upon expiry of an overrun timer which is activated upon deactivation of the switch, wherein the length of the overrun timer is dependent upon the length of activation of the switch.
Embodiment 6. A method according to embodiment 5, wherein the overrun timer is capped at a maximum overrun length.
Embodiment 7. A method according to embodiment 5 or 6, wherein upon deactivation of the switch, the overrun timer is set to one of a plurality of discrete overrun lengths.
Embodiment 8. A method according to embodiment 7, wherein the shortest overrun length is no overrun.
Embodiment 9. A method according to embodiment 6 or 7, wherein the number of discrete overrun lengths is four.
Embodiment 10. A method according to embodiment 7, 8 or 9, wherein the discrete overrun lengths are in five minute intervals.
Embodiment 11. A ventilation system, comprising a fan, a switch and a controller, wherein the controller is arranged to increase the ventilation rate of the system upon activation of the switch and wherein the controller is arranged to decrease the ventilation rate of the system upon expiry of an overrun timer which is activated upon deactivation of the switch, wherein the length of the overrun timer is dependent upon the length of activation of the switch.
Embodiment 12. A system according to embodiment 11, wherein the controller is arranged to cap the overrun timer at a maximum overrun length.
Embodiment 13. A system according to embodiment 11 or 12, wherein upon deactivation of the switch, the controller is arranged to set the overrun timer to one of a plurality of discrete overrun lengths.
Embodiment 14. A system according to embodiment 13, wherein the shortest overrun length is no overrun.
Embodiment 15. A system according to embodiment 13 or 14, wherein the number of discrete overrun lengths is four.
Embodiment 16. A system according to embodiment 13, 14 or 15, wherein the discrete overrun lengths are in five minute intervals.

## Claims

1. A method of operating a ventilation system, comprising:
taking readings of humidity level at intervals in time; **characterised by** monitoring the number of consecutive rises in humidity level; and
selectively increasing the ventilation rate of said system based on said number of consecutive rises.

2. A method as claimed in claim 1, wherein the ventilation rate is selectively increased based on the number of consecutive rises and on the size of at least one of said consecutive rises, preferably the most recent consecutive rise.

3. A method as claimed in claim 2, wherein the number of consecutive rises and the corresponding size of at least one of the rises are associated in a look up table and wherein the step of selectively increasing the ventilation comprises looking up one criterion in the look up table and determining if the corresponding criterion is also met.

4. A method as claimed in claim 3, wherein, in the look up table, higher numbers of rises are associated with lower sizes of rise.

5. A method as claimed in any preceding claim, further comprising:
storing an ambient humidity level (80) before the increase in ventilation rate,
monitoring a peak humidity level (90), and
calculating a threshold humidity level based on said ambient humidity level (80) and said peak humidity level (90),
and reducing the ventilation rate of the system after the current humidity level has reduced below said threshold humidity level.

6. A method as claimed in claim 5, wherein the ventilation rate of the system is reduced a predetermined time after the current humidity level has reduced below the threshold humidity level.

7. A method as claimed in claim 5 or 6, wherein the stored ambient humidity level (80) is based on an average of humidity readings taken before said consecutive rises, and preferably the humidity readings used to calculate the average are more frequent than the readings used to determine consecutive rises.

8. A method as claimed in claim 5, 6 or 7, wherein the calculated threshold level is an average of the stored ambient humidity level (80) and the peak humidity level (90).

9. A ventilation system comprising:
at least one humidity sensor,
at least one ventilation fan, and
a controller,
wherein said controller is arranged to take readings from said humidity sensor at intervals in time, and **characterised in that** said controller is arranged to monitor the number of consecutive rises in humidity level and selectively increase the ventilation rate of said at least one fan based on said number of consecutive rises.

10. A system as claimed in claim 9, wherein the controller is arranged to selectively increase the ventilation rate based on the number of consecutive rises and on the size of at least one of said consecutive rises, preferably the most recent consecutive rise.

11. A system as claimed in claim 10, further comprising a look up table which stores the number of consecutive rises in association with the corresponding size of at least one of the rises, and wherein the controller is arranged to selectively increase the ventilation rate based on looking up one criterion in the look up table and determining if the corresponding criterion is also met, and preferably in the look up table, higher numbers of rises are associated with lower sizes of rise.

12. A system as claimed in claim 9, 10 or 11, wherein the controller is further arranged to:
store an ambient humidity level (80) before the increase in ventilation rate,
monitor a peak humidity level (90), and
calculate a threshold humidity level based on said ambient humidity level (80) and said peak humidity level (90),
and wherein the controller is arranged to reduce the ventilation rate of the system after the current humidity level has reduced below said threshold humidity level.

13. A system as claimed in claim 12, wherein the controller is arranged to reduce the ventilation rate of the system a predetermined time after the current humidity level has reduced below the threshold humidity level.

14. A system as claimed in claim 12 or 13, wherein the stored ambient humidity level (80) is based on an average of humidity readings taken before said consecutive rises, and preferably the humidity readings used to calculate the average are more frequent than the readings used to determine consecutive rises.

15. A system as claimed in claim 12, 13 or 14, wherein the calculated threshold level is an average of the stored ambient humidity level (80) and the peak humidity level (90).

## Patentansprüche

1. Verfahren zum Betreiben eines Belüftungssystems, umfassend:
Ablesen von Messwerten eines Feuchtigkeitspegels in Zeitintervallen; **gekennzeichnet durch**
Überwachen der Anzahl von aufeinanderfolgenden Anstiegen des Feuchtigkeitspegels; und
selektives Erhöhen der Belüftungsrate des Systems auf der Grundlage der Anzahl von aufeinanderfolgenden Anstiegen.

2. Verfahren nach Anspruch 1, wobei die Belüftungsrate selektiv auf der Grundlage der Anzahl von aufeinanderfolgenden Anstiegen und des Ausmaßes von mindestens einem der aufeinanderfolgenden Anstiege, vorzugsweise des letzten aufeinanderfolgenden Anstiegs, erhöht wird.

3. Verfahren nach Anspruch 2, wobei die Anzahl von aufeinanderfolgenden Anstiegen und das entsprechende Ausmaß von mindestens einem der Anstiege in einer Nachschlagtabelle zugeordnet ist, und wobei der Schritt des selektiven Erhöhens der Belüftung das Nachschlagen von einem Kriterium in der Nachschlagtabelle und das Bestimmen, ob das entsprechende Kriterium auch erfüllt ist, umfasst.

4. Verfahren nach Anspruch 3, wobei in der Nachschlagtabelle höhere Anzahlen von Anstiegen niedrigeren Ausmaßen eines Anstiegs zugeordnet sind.

5. Verfahren nach einem der vorstehenden Ansprüche, weiter umfassend:
Speichern eines Raum-Feuchtigkeitspegels (80) vor Erhöhen der Belüftungsrate, Überwachen eines Spitzen-Feuchtigkeitspegels (90), und
Berechnen eines Schwellwert-Feuchtigkeitspegels auf der Grundlage des Raum-Feuchtigkeitspegels (80) und des Spitzen-Feuchtigkeitspegels (90),
und Absenken der Belüftungsrate des Systems, nachdem sich der aktuelle Feuchtigkeitspegel auf unter den Schwellwert-Feuchtigkeitspegel abgesenkt hat.

6. Verfahren nach Anspruch 5, wobei die Belüftungsrate des Systems eine vorgegebene Zeit, nachdem sich der aktuelle Feuchtigkeitspegel auf unter den Schwellwert-Feuchtigkeitspegel abgesenkt hat, abgesenkt wird.

7. Verfahren nach Anspruch 5 oder 6, wobei der gespeicherte Raum-Feuchtigkeitspegel (80) auf einem Durchschnitt von abgelesenen Messwerten der Feuchtigkeit beruht, die vor den aufeinanderfolgenden Anstiegen abgelesen wurden, und wobei vorzugsweise die abgelesenen Messwerte der Feuchtigkeit, die verwendet werden, um den Durchschnitt zu berechnen, häufiger sind als die Messwerte, die verwendet werden, um die aufeinanderfolgenden Anstiege zu bestimmen.

8. Verfahren nach Anspruch 5, 6 oder 7, wobei der berechnete Schwellwertpegel ein Durchschnitt des gespeicherten Raum-Feuchtigkeitspegels (80) und des Spitzen-Feuchtigkeitspegels (90) ist.

9. Belüftungssystem, umfassend:
mindestens einen Feuchtigkeitssensor,
mindestens einen Belüftungsventilator, und
eine Steuerung,
wobei die Steuerung angeordnet ist, um in Zeitintervallen Messwerte vom Feuchtigkeitssensor abzulesen, und **dadurch gekennzeichnet, dass** die Steuerung angeordnet ist, um die Anzahl von aufeinanderfolgenden Anstiegen des Feuchtigkeitspegels zu überwachen und selektiv die Belüftungsrate des mindestens einen Ventilators auf der Grundlage der Anzahl von aufeinanderfolgenden Anstiegen zu erhöhen.

10. System nach Anspruch 9, wobei die Steuerung angeordnet ist, um selektiv die Belüftungsrate auf der Grundlage der Anzahl von aufeinanderfolgenden Anstiegen und des Ausmaßes von mindestens einem der aufeinanderfolgende Anstiege, vorzugsweise des letzten aufeinanderfolgenden Anstiegs, zu erhöhen.

11. System nach Anspruch 10, weiter umfassend eine Nachschlagtabelle, die die Anzahl von aufeinanderfolgenden Anstiegen unter Zuordnung zum entsprechenden Ausmaß des mindestens einen der Anstiege speichert, und wobei die Steuerung angeordnet ist, um die Belüftungsrate selektiv auf der Grundlage des Nachschlagens von einem Kriterium in der Nachschlagtabelle und des Bestimmens, ob das entsprechende Kriterium auch erfüllt ist, zu erhöhen, und wobei in der Nachschlagtabelle vorzugsweise höhere Anzahlen von Anstiegen geringeren Ausmaßen eines Anstiegs zugeordnet sind.

12. System nach Anspruch 9, 10 oder 11, wobei die Steuerung weiter angeordnet ist, um:
einen Raum-Feuchtigkeitspegel (80) vor dem Erhöhen der Belüftungsrate zu speichern,
einen Spitzen-Feuchtigkeitspegel (90) zu überwachen, und
einen Schwellwert-Feuchtigkeitspegel auf der Grundlage des Raum-Feuchtigkeitspegels (80) und des Spitzen-Feuchtigkeitspegels (90) zu berechnen,
und wobei die Steuerung angeordnet ist, um die Belüftungsrate des Systems abzusenken, nachdem der aktuelle Feuchtigkeitspegel unter den Schwellwert-Feuchtigkeitspegel abgesunken ist.

13. System nach Anspruch 12, wobei die Steuerung angeordnet ist, um die Belüftungsrate des Systems eine vorgegebene Zeit, nachdem sich der aktuelle Feuchtigkeitspegel unter den Schwellwert-Feuchtigkeitspegel abgesenkt hat, abzusenken.

14. System nach Anspruch 12 oder 13, wobei der gespeicherte Raum-Feuchtigkeitspegel (80) auf einem Durchschnitt von abgelesenen Messwerten der Feuchtigkeit beruht, die vor den aufeinanderfolgenden Anstiegen abgelesen wurden, und wobei vorzugsweise die abgelesenen Messwerte der Feuchtigkeit, die verwendet werden, um den Durchschnitt zu berechnen, häufiger sind als die Messwerte, die verwendet werden, um aufeinanderfolgende Anstiege zu bestimmen.

15. System nach Anspruch 12, 13 oder 14, wobei der berechnete Schwellwertpegel ein Durchschnitt des gespeicherten Raum-Feuchtigkeitspegels (80) und des Spitzen-Feuchtigkeitspegels (90) ist.

## Revendications

1. Procédé de fonctionnement d'un système de ventilation, comprenant :
la prise de mesures du niveau d'humidité à intervalles de temps ; **caractérisé par** la surveillance du nombre de hausses consécutives du niveau d'humidité ; et
l'augmentation sélective de la vitesse de ventilation dudit système sur la base dudit nombre de hausses consécutives.

2. Procédé selon la revendication 1, dans lequel la vitesse de ventilation est augmentée sélectivement sur la base du nombre de hausses consécutives et de la taille d'au moins une desdites hausses consécutives, de préférence de la hausse consécutive la plus récente.

3. Procédé selon la revendication 2, dans lequel le nombre de hausses consécutives et la taille correspondante d'au moins une des hausses sont associés dans une table de consultation et dans lequel l'étape d'augmentation sélective de la ventilation comprend la consultation d'un critère dans la table de consultation et la détermination du fait si le critère correspondant est rempli.

4. Procédé selon la revendication 3, dans lequel, dans la table de consultation, les nombres de hausses plus élevés sont associés à des tailles de hausse plus faibles.

5. Procédé selon l'une quelconque des revendications précédentes, comprenant en outre :
le stockage d'un niveau d'humidité ambiant (80) avant l'augmentation de la vitesse de ventilation,
la surveillance d'un niveau d'humidité de crête (90), et
le calcul d'un niveau d'humidité de seuil sur la base dudit niveau d'humidité ambiant (80) et dudit niveau d'humidité de crête (90),
et la réduction de la vitesse de ventilation du système après que le niveau d'humidité actuel a diminué en dessous dudit niveau d'humidité de seuil.

6. Procédé selon la revendication 5, dans lequel la vitesse de ventilation du système est réduite un temps prédéterminé après que le niveau d'humidité actuel a diminué en dessous du niveau d'humidité de seuil.

7. Procédé selon la revendication 5 ou 6, dans lequel le niveau d'humidité ambiant stocké (80) est basé sur une moyenne de mesures d'humidité prises avant lesdites hausses consécutives, et de préférence les mesures d'humidité utilisées pour calculer la moyenne sont plus fréquentes que les mesures utilisées pour déterminer des hausses consécutives.

8. Procédé selon la revendication 5, 6 ou 7, dans lequel le niveau de seuil calculé est une moyenne du niveau d'humidité ambiant stocké (80) et du niveau d'humidité de crête (90).

9. Système de ventilation comprenant :
au moins un capteur d'humidité,
au moins un ventilateur de ventilation, et
un dispositif de commande,
dans lequel ledit dispositif de commande est agencé pour prendre des mesures dudit capteur d'humidité à intervalles de temps, et **caractérisé en ce que** ledit dispositif de commande est agencé pour surveiller le nombre de hausses consécutives du niveau d'humidité et augmenter sélectivement la vitesse de ventilation dudit au moins un ventilateur sur la base dudit nombre de hausses consécutives.

10. Système selon la revendication 9, dans lequel le dispositif de commande est agencé pour augmenter sélectivement la vitesse de ventilation sur la base du nombre de hausses consécutives et de la taille d'au moins une desdites hausses consécutives, de préférence de la hausse consécutive la plus récente.

11. Système selon la revendication 10, comprenant en outre une table de consultation qui stocke le nombre de hausses consécutives en association avec la taille correspondante d'au moins une des hausses, et dans lequel le dispositif de commande est agencé pour augmenter sélectivement la vitesse de ventilation sur la base de la consultation d'un critère dans la table de consultation et de la détermination du fait si le critère correspondant est également rempli, et de préférence, dans la table de consultation, les nombres de hausses plus élevés sont associés à des tailles de hausse plus faibles.

12. Système selon la revendication 9, 10 ou 11, dans lequel le dispositif de commande est agencé en outre pour :
stocker un niveau d'humidité ambiant (80) avant l'augmentation de la vitesse de ventilation,
surveiller un niveau d'humidité de crête (90), et
calculer un niveau d'humidité de seuil sur la base dudit niveau d'humidité ambiant (80) et dudit niveau d'humidité de crête (90),
et dans lequel le dispositif de commande est agencé pour réduire la vitesse de ventilation du système après que le niveau d'humidité actuel a diminué en dessous dudit niveau d'humidité de seuil.

13. Système selon la revendication 12, dans lequel le dispositif de commande est agencé pour réduire la vitesse de ventilation du système un temps prédéterminé après que le niveau d'humidité actuel a diminué en dessous du niveau d'humidité de seuil.

14. Système selon la revendication 12 ou 13, dans lequel le niveau d'humidité ambiant stocké (80) est basé sur une moyenne de mesures d'humidité prises avant lesdites hausses consécutives, et de préférence les mesures d'humidité utilisées pour calculer la moyenne sont plus fréquentes que les mesures utilisées pour déterminer des hausses consécutives.

15. Système selon la revendication 12, 13 ou 14, dans lequel le niveau de seuil calculé est une moyenne du niveau d'humidité ambiant stocké (80) et du niveau d'humidité de crête (90).
